# EUROPEAN PATENT SPECIFICATION

(11) **EP 4 122 162 B1**
(45) Date of publication and mention of the grant of the patent: **18.09.2024**
(21) Application number: 20719493.7
(22) Date of filing: 19.03.2020
(51) Int. Cl.: H04L 41/142, H04L 41/0816, H04L 41/5009, H04L 43/024, H04W 16/18, H04W 24/04, H04W 24/10, H04W 4/02, H04W 24/02

(54) **RESOURCE EFFICIENT NETWORK PERFORMANCE ANALYTICS**
RESSOURCENEFFIZIENTE NETZWERKLEISTUNGSANALYTIK
ANALYSE DE PERFORMANCE DE RÉSEAU EFFICACE EN RESSOURCES

(43) Date of publication of application: 25.01.2023
(73) Proprietor: Telefonaktiebolaget LM Ericsson (publ), 164 83 Stockholm (SE)
(72) Inventor: KOVÁCS, László, 2462 Martonvásár (HU); BÁDER, Attila, 2071 Paty (HU); MAGYAR, Gábor, 2330 Dunaharaszti (HU)
(74) Representative: Ericsson
(86) International application number: PCT/IB2020/052561
(87) International publication number: WO 2021/186221

(56) References cited:
- WO-A1-02/39673
- US-A1- 2010 298 007
- US-A1- 2015 264 644
- US-A1- 2017 078 171
- US-A1- 2018 077 033
- JONGHYUN KIM ET AL: "A Survey-Based Mobility Model of People for Simulation of Urban Mesh Networks", PROCEEDINGS MESHNETS '05, 1 January 2005 (2005-01-01), pages 1 - 11, XP055754227, Retrieved from the Internet <URL:http://citeseerx.ist.psu.edu/viewdoc/download?doi=10.1.1.85.9465&rep=rep1&type=pdf> [retrieved on 20201126]
- VARGA PAL ET AL: "LTE core network testing using generated traffic based on models from real-life data", 2013 IEEE INTERNATIONAL CONFERENCE ON ADVANCED NETWORKS AND TELECOMMUNICATIONS SYSTEMS (ANTS), IEEE, 15 December 2013 (2013-12-15), pages 1 - 6, XP032592773, ISSN: 2153-1676, [retrieved on 20140418], DOI: 10.1109/ANTS.2013.6802892
- MUCELLI REZENDE OLIVEIRA EDUARDO ET AL: "Mobile data traffic modeling: Revealing temporal facets", COMPUTER NETWORKS, ELSEVIER, AMSTERDAM, NL, vol. 112, 4 November 2016 (2016-11-04), pages 176 - 193, XP029867437, ISSN: 1389-1286, DOI: 10.1016/J.COMNET.2016.10.016

## Description

### TECHNICAL FIELD

The present disclosure relates generally to a network analytics system for monitoring network performance and, more particularly to a resource efficient network analytics system that is configured to monitor a limited set of events for a limited number of subscribers for detection of service quality degradation and network issues.

### BACKGROUND

In Network Operation Centers of mobile networks, basic network key performance indicators (KPIs) are continuously being monitored. The KPIs are based on node and network counters. Node counters are implemented in network nodes and collected periodically by the performance monitoring (PM) systems. Counters are aggregated in time for network node or other dimensions. KPIs can indicate node or network failures but usually they are not detailed enough for troubleshooting, and they are not suitable for identifying end-to-end, user-perceived service quality issues. Troubleshooting is typically performed by investigating more detailed network logs collected from different network nodes and domains.

Advanced analytics systems, such as the Ericsson Expert Analytics (EEA) are based on collecting and correlating atomic network events. These type of passive monitoring solutions are suitable for session-based troubleshooting and analysis of network issues as well as for monitoring service quality and end-to-end customer experience.

Event-based analytics requires real-time collection and correlation of characteristic node and protocol events from different radio and core nodes, probing signaling interface and sampling of the user-plane traffic as well. In addition to data collection and correlation functions, the system requires an advanced database, rule engine, and a big data analytics platform as well.

In view of the introduction of Fifth Generation (5G) mobile networks, it is expected that mobile networks will serve (and provide quality of service, quality of experience) a large variety of new service types as well as serve a much higher number of devices or user equipment (UEs) than previous network technologies. The expected traffic will significantly increase the incoming event rate to be processed by network analytics systems.

One of the major issues with the event-based monitoring methods is the large amount of data which needs be processed, and consequently the large hardware requirement of the solution. For adequate end-to-end analysis of sessions, events are collected per UE from radio and core nodes, which includes heavy radio environment measurements (especially periodic measurements) and the registration and re-registration messages. The other major data source is related to the user-plane traffic which can be as much as 1-2 terabytes per second (Tbps) and the corresponding processing and storage capacity in cloud environment.

Document US 2015/264644 A1 discloses a technique pertaining to optimization of mobile telecommunications service during a power outage at one or more base stations. Said optimization includes identifying one or more of a plurality of base stations to which non-emergency electrical power has been interrupted, determining an initial number of users in areas corresponding to the one or more of the plurality of base stations, generating a user location probability model and a user call probability model, scheduling initial battery power operation for the plurality of base stations, monitoring user calls and user movement after the battery power operation has started, updating the user location probability model and the user call probability model based on the monitoring, and updating battery power operation scheduling for the plurality of base stations.

Document WO 02/39673 A1 discloses a method and a system of identifying and determining degradation of the quality of service (QoS) perceived by a subscriber in a network such as the Internet. Traffic of individual applications of the subscriber and aggregate traffic of a subscriber are monitored, captured, and processed to produce QoS statistics. End-to-end QoS metrics are provided for TCP connections based on the observation of packet flows at a single monitoring point. The QoS metrics include, for example, packet loss internally and externally to the monitoring point, detection of stalled periods and estimation of path delay.

Document "A survey-Based Mobility Model of People for Simulation of Urban Mesh Networks", Jonghyun Kim et al., Proceedings on MeshNets '05, 1 January 2005, discloses a mobility model of people in urban areas for mobile wireless network simulation. A 3-layer hierarchical approach is taken where the highest layer is an activity model that determines the high level activity that the node is performing (e.g., working). The second level is a task model that models the specific task within an activity (e.g., meeting with three people). The third level is an agent model that determines how the person moves from one location to another. These three models are based on a number of surveys and data sources. The activity model is based on a recent US Department of Labor Bureau of Labor Statistics time use study. Such time use studies gather detailed information about how the interviewees spent their time. The task model mostly focuses on mobility of office workers and is based on the current findings from research on meetings analysis. The agent model is based on the work from urban planning that has collected extensive knowledge of pedestrian flow. The models presented are implemented in a mobility simulator that is integrated with a wireless propagation model.

Document US 2017/078171 A1 discloses a communication analytics engine that executes in conjunction with a data collection platform that may provide a unified and scalable solution for call data aggregation and processing. A data collection platform may establish a communication connection with a wireless carrier network. The data collection platform may collect call data of multiple user devices via the communication connection, in which the multiple user devices may use the wireless carrier network to initiate and receive calls to one or more additional devices. The data collection platform may convert the call data into a format that is readable by the communication analytics engine. The communication analytics engine may analyze the call data to generate analytic results that includes one or more key performance indicators (KPIs).

Document US 2018/077033 A1 discloses methods, computer-readable media and devices for selecting a plurality of network devices to perform a plurality of tasks in accordance with a set of functional network analytics instructions. For example, a processor deployed in a telecommunication network may receive a set of functional network analytics instructions compiled from a set of instructions in accordance with a functional network analytics platform application programming interface. The processor may further, in accordance with the set of functional network analytics instructions, select a plurality of network devices to perform a plurality of tasks, send the plurality of tasks to the plurality of network devices, receive control plane data from the plurality of network devices, correlate the control plane data in accordance with operations defined in the set of functional network analytics instructions to create resulting data, and forward the resulting data to at least one recipient device.

### SUMMARY

According to the present disclosure, a method, a network analysis system, a computer program and a carrier according to the independent claims are provided. Developments are set forth in the dependent claims.

According to one aspect of the disclosure, event-based network analytics system is provided for monitoring KPIs. The event-based analytics system implements an adaptive approach for network performance monitoring to reduce the required hardware resources of event-based network analytics system. In exemplary embodiments, performance monitoring is performed for a subset of KPIs, which are used for symptom detections, for a representative subset of subscribers. Dynamic filtering is performed in the different event data sources in order to ensure the statistically required samples for calculating KPIs for symptom detection. In addition, the monitoring of the limited set of events is only performed for an adaptively selected subset of the total subscriber base that is estimated to cover the geographical area of the mobile network in a statistically reliable way.

### BRIEF DESCRIPTION OF THE DRAWINGS

Figure 1 illustrates an exemplary wireless communication network.
Figure 2 illustrates an exemplary process flow implemented by a network analytics system for network performance monitoring.
Figure 3 illustrates an embodiment of a network analytics system for network performance monitoring.
Figure 4 illustrates an exemplary method of performance monitoring for a selected subset of subscribers in a wireless communication network.
Figure 5 illustrates an exemplary method of learning location models and activity models for subscribers in a wireless communication network.
Figure 6 illustrates an exemplary network monitoring control node configured to perform network monitoring for a set of representative subscribers.
Figure 7 illustrates an exemplary location and activity modeling node configured to learn location and activity models for subscribers within the wireless communication network.
Figure 8 illustrates the main functional elements of a network node configured for network performance monitoring as herein described.

### DETAILED DESCRIPTION

Referring now to the drawings, an exemplary embodiment of the disclosure will be described in the context of a 5G wireless communication network. Those skilled in the art will appreciate that the methods and apparatus herein described are not limited to use in 5G networks but may also be used in wireless communication networks operating according to other standards.

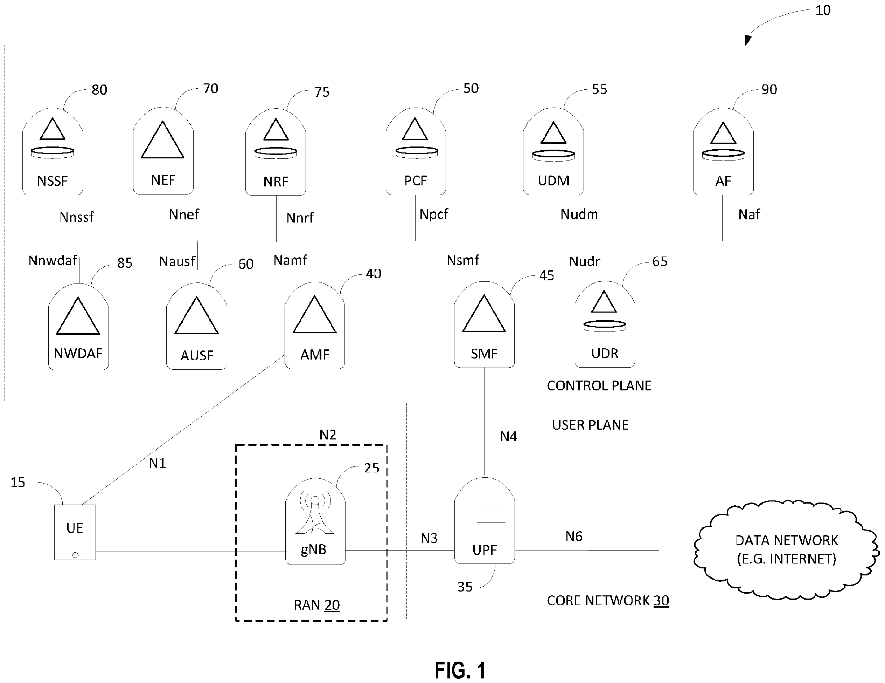

Figure 1 illustrates a wireless communication network 10 according to one exemplary embodiment. The wireless communication network 10 comprises a radio access network (RAN) 20 and a core network 30 employing a service-based architecture. The RAN 20 comprises one or more base stations 25 providing radio access to UEs 100 operating within the wireless communication network 10. The base stations 25 are also referred to as gNodeBs (gNBs). The core network 30 provides a connection between the RAN 20 and other packet data networks, such as the IMS or the Internet.

In one exemplary embodiment, the core network 30 comprises a plurality of network functions (NFs), such as a User Plane Function (UPF) 35, an Access And Mobility Management Function (AMF) 40, a Session Management Function (SMF) 45, a Policy Control Function (PCF) 50, a Unified Data Management (UDM) function 55, a Authentication Server Function (AUSF) 60, a Unified Data Repository (UDR) 65, a Network Exposure Function (NEF) 70, a Network Repository Function (NRF) 75 and a Network Slice Selection Function 80. The core network 30 additionally includes a NWDAF 85 for generating and distributing analytics reports. These NFs comprise logical entities that reside in one or more core network nodes, which may be implemented by one or more processors, hardware, firmware, or a combination thereof. The functions may reside in a single core network node or may be distributed among two or more core network nodes. The network 10 may further include one or more Application Functions (AFs) 90 providing services to the network and or subscribers. The AFs 90 may be located in the core network 30 or be external to the core network 30.

In conventional wireless communication network, the various NFs (e.g., SMF 45, AMF 40, etc.) in the core network 30 communicate with one another over predefined interfaces. In the service-based architecture shown in Figure 1, instead of predefined interfaces between the control plane functions, the wireless communication network 10 uses a services model in which the NFs query the NRF 75 or other NF discovery node to discover and communicate with each other.

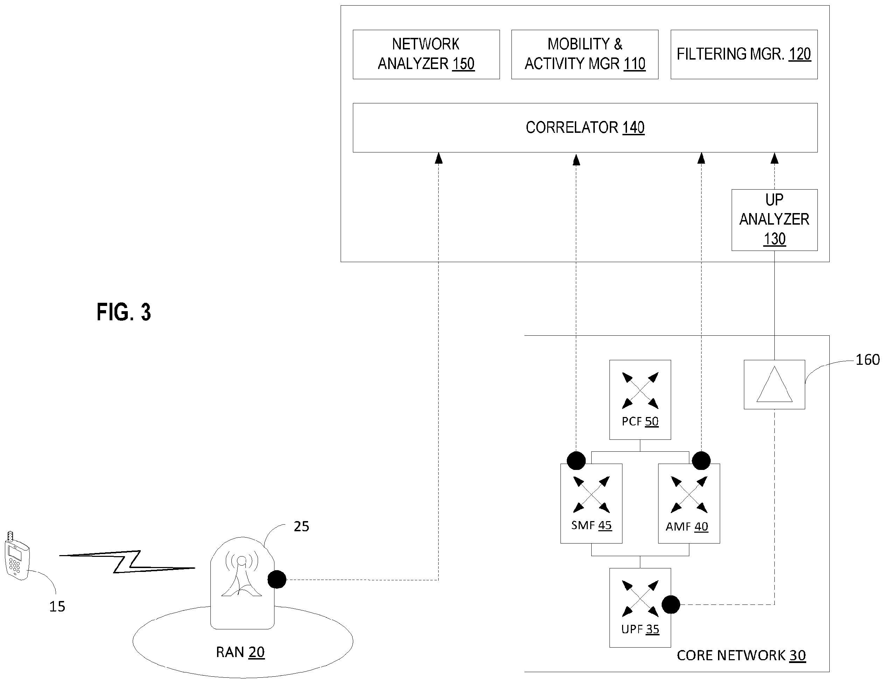

According to one aspect of the disclosure, an event-based network analytics system 100 (Fig. 3) is provided for network performance monitoring. The network analytics system 100 can be implemented by one or more instances of a NWDAF 85, application function (AF) 90, or some combination thereof. The event-based network analytics system 100 implements an adaptive approach to reduce the required hardware resources for event-based network analytics system. During a monitoring period, network performance monitoring is limited to a subset of events, which are used for symptom detection, for a representative subset of subscribers. Dynamic filtering in the different event data sources is performed in order to ensure the statistically required samples for calculating KPIs for symptom detection. In addition, the monitoring of the limited set of events is only performed for an adaptively chosen small subset of the total subscriber base that is estimated to cover the geographical entirety of the mobile network in a statistically reliable way.

The network is divided into monitoring areas, each covering multiple cells or the serving areas of several base stations. The network analytics system continuously collects and updates location and activity data for the subscribers in the monitoring areas and maintains a list of the active subscribers in these monitoring areas. Using statistical methods, the number of active subscribers that are required for symptom detection is determined per monitoring area and per event source. Based on the statistical methods, the analytical system selects the subscribers for which the event collection should be activated in each data sources. The selected number of subscribers is much lower than the total number of active subscribers. The user selection is done in representative way.

In case degradation is detected by the symptom KPIs in a monitoring area, additional troubleshooting KPIs are activated for the monitoring area and the data collection is activated for all or an increased number of active subscribers located in the monitoring area.

Optionally, the symptom KPIs can be monitored for other dimensions as well, such as per terminal, per service provider, etc. In this case, the analytics system collects subscriber information related to usage in these dimensions. If the symptom KPIs show degradation in another dimension, the number of monitored subscribers in the relevant dimension is increased to the troubleshooting level.

It is assumed that in majority of the time, the wireless network operates correctly and provides good service quality in most monitoring areas. The network analytics systems as herein described uses much lower hardware resources to monitor session in these areas than for sessions in monitoring areas where service quality degradation and network or node issues are detected. This reduction is achieved by monitoring only a limited number of symptoms KPIs per monitoring area for a subset of all the active users in the network. The network analytics system automatically detects and localizes issues where more detailed monitoring is needed and automatically increases the event rate or changes the event filtering settings to enable detailed troubleshooting and root cause analysis for the areas where service quality degradation or network issues are detected. Thus, the network analytics system can reduce hardware resources (processing capacity, memory and disk) by 60%-80% compared to full monitoring.

The number of subscribers at different times can be different and change dynamically over time in the different monitoring areas. The network analytics system maintains a list of active subscribers per monitoring area. At any time, it can select explicitly the list of subscribers per area and for the whole network for which event collection should be performed and set automatically subscriber filters at each event source. Therefore, event collection is performed only for the required number of subscribers.

The symptom KPIs are calculated per monitoring area, which enables detecting cell related, i.e., radio issues. The symptom KPIs can be monitored in other dimension as well, which enables detecting other issues such as terminal or service-related issues.

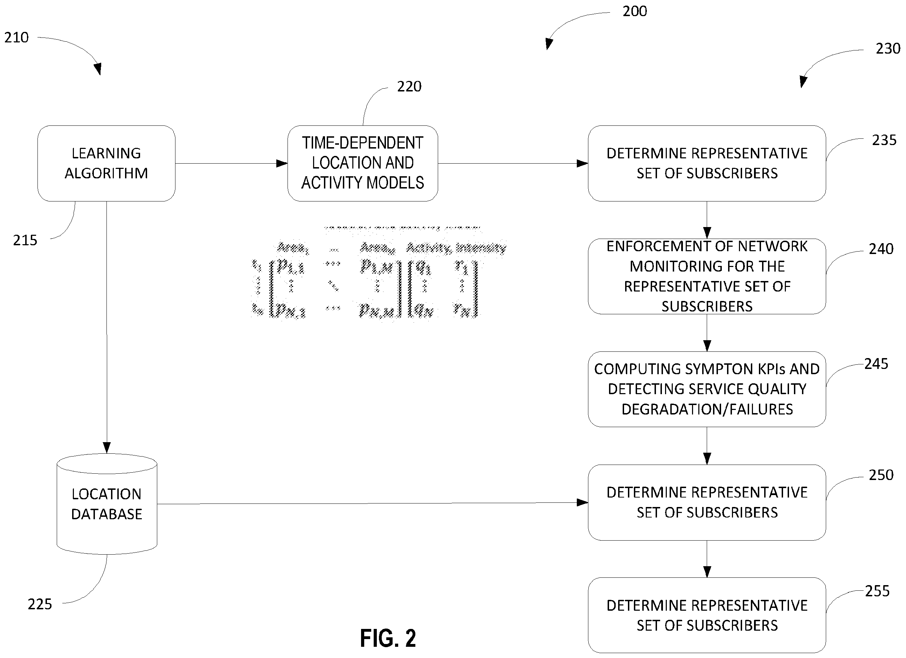

Figure 2 illustrates an exemplary process flow 200 for event-based network analytics as herein described. The process flow includes a learning loop 210 and an operational loop 230. Both loops are in action continuously. The learning loop 210 implements a learning algorithm 225 that is continuously working to infer the currently best model of the subscribers' location and activity patterns. After initial subscriber location and activity models 220 have been inferred by the learning loop 210, the operational loop 230 is continuously working to enable network performance monitoring and analytics for a suitable subset of representative subscribers based on the location and activity models 220, who are identified by International Mobile Subscriber Identities (IMSIs). The main functions performed by the operational loop 230 comprises computing an optimal or representative set of subscribers to be monitored based on the location and activity models (235) , enforcing performance monitoring for the representative set of subscribers (240), computing symptom KPIs and detecting service degradation and/or network and node failures (245), expanding performance monitoring when service quality degradation and/or failure is detected (250), and determining root cause and corrective actions for any service quality degradation or failure (255).

Figure 3 illustrates an overall architecture for event and data collection according to an embodiment of the present disclosure. The network analytics system 100 includes a mobility and activity manager 110, a filtering manager 120, user plane (UP) analyzer 130, correlator 140 and network analyzer 150. As will be hereinafter described in greater detail, the mobility and activity manager 110 implements the learning loop 210 and generates the location and activity models 220 for individual subscribers. The filtering manager 120, user plane (UP) analyzer 130, correlator 140 and network analyzer 150 implement the operational loop 230. The filtering manager 120 determines the representative set of subscribers for which basic KPI monitoring is performed based on the location and activity models provided by the mobility and activity manager 110. The filtering manager 120 also interacts with various network nodes in the network 10 to enforce the data collection for the representative set of subscribers. The UP analyzer 130 computes the basic KPIs based on a filtered user plane traffic stream provided by a packet filer in the network. The correlator 140 correlates event streams provided by various network nodes (e.g., AMF 40, SMF 45, gNB 25) with corresponding packets in the user plane traffic. The network analyzer 150 detects service degradation and/or network and node failures, and performs root cause analysis when service quality degradation or failure is detected by the UP analyzer. When service quality degradation is detected, the network analyzer 150 signals the filtering manager to add additional subscribers and root cause analysis (RCA) events for monitoring areas where service degradation is detected to enable root cause analysis by the network analyzer 150.

Referring back to Figure 2, the input data sources for the learning loop 210 comprise mobility events that can signal a new location for a subscriber and activity signaling events that can signal activity of the subscriber. A mobility event stream and activity event stream are preferably collected for all subscribers, or as many as is practical. The term input event is used herein to refer to both mobility events and activity signaling events. An input event typically comprises a subscriber identifier (e.g., IMSI), which can be used for correlating mobility events with activity signaling events and user plane traffic flows.

The following mobility events, for example, can be used to identify the location of a subscriber in Fourth Generation (4G) and 5G networks:
- Attach Procedures. In addition to the subscriber identity and location, this event can also provide information about the subscriber device such as the International Mobile Equipment Identity (IMEI) and IMEI Type Allocation Code (IMEITAC).
- Service Request Procedures (UE or network initiated).
- S1 and X2 Handover Procedures.

An activity signaling event is generated for a given time resolution (e.g., once per hour) if there is any data traffic during the time bin. Signaling traffic is captured independently from the sampling performed by the operational loop 230. The activity signaling event contains a subscriber identifier (e.g., IMSI), timestamp, and bytes uploaded and downloaded.

In addition to the mobility and activity signaling events, reference data may optionally be obtained. The reference data can be used to provide analytics in dimensions other that locations. For example, using reference data, KPIs could be generated for different device types, subscription types and/or subscription plans. Exemplary reference data may include:
- Device reference data enabling the lookup of IMEITAC to Vendor-Model (end-user device identification)
- Subscriber reference data including subscription plans, subscriber types, etc.

The mobility event streams and activity signaling event streams are input to the mobility and activity manager 110, which implements the learning loop 210. The learning algorithm 215 implemented by the mobility and activity manager 110 has three main tasks: to learn the location model for each subscriber from the mobility event stream; to learn the activity model for each subscriber from the input activity event stream, and maintain a location database 225 indicating the current location of each subscriber. The location database 225 is updated responsive to a mobility event if there is any change in the actual location of the subscriber. The learning parts of the learning algorithm are based on statistical data collection.

The location and activity models 220 are derived for a particular time window (e.g., one week). The same time window is preferably used for both the location model and activity model. The time window is divided into N time bins based on a desired time resolution of the models 220 (e.g. 1 hour time bins). Thus, the time dimension of the location model and activity model assuming a one week time window and 1 hour time resolution will be 168 time bins (N = 7 × 24 = 168).

The location model also includes a geographic dimension. The network coverage area is divided into M distinct geographic area based on a desired geographic resolution. Examples of different geographic resolutions include:
- Each cell comprises a distinct area.
- A group of cells served by the same base station comprises a distinct area.
- A group of cells served by multiple base stations comprises a distinct area.
- A group of cells within to a given polygonal area comprises a distinct area.

Location and activity modelling is performed on a per subscriber basis. That is, separate location models 220 and activity models 220 are derived for each subscriber. The location model is a N × M matrix containing probabilities p_i, j that the subscriber is at time segment i located within AreaJ with the given probability. The location model is independent of any traffic activity, so inactive periods can still produce input to location model whenever the subscriber is moving, though the most location updates may be performed when there is actual traffic detected. The activity model comprises an activity vector of N elements q_i that contain the probability that the subscriber will be active at time segment I with the given probability. In some embodiments, the activity model may further include an activity intensity vector indicating the intensity of the activity. The activity intensity vector comprises N elements, each containing a numeric indicator (e.g., falling into [0-1] range) that is proportional to the traffic volume in case of activity. This intensity can be a derivative of the traffic bytes, even by further transformations such as logarithm, etc. The aim is to provide a magnitude of traffic. All other factors being equal, the operational model can choose subscribers with higher activity to generate more KPI samples for analysis.

The mobility and activity manager 110 also maintains the location database 225. The location database 225 is a simple database that provides a way to lookup subscriber location (last known location for a given IMSI or a list of subscribers in a given monitoring area, AreaJ. The mobility and activity manager 110 automatically updates the location database 225 whenever a new location event arrives for a subscriber in the input stream.

The mobility and activity manager 110 provides the location and activity models 220 for the individual subscribers to the filtering manager 120, which implements part of the operational loop 230. The function of the operational loop 230 can be divided into five main aspects:
- Determining a representative set of subscribers for which basic KPI monitoring is performed:
- Enforcing data collection for the representative set of subscribers;
- Computation of symptom KPIs based on the collected events from the representative set of subscribers and detection of service degradation;
- Adaptation of the data collection responsive to service degradation to collect data for additional subscribers and events to enable root cause analysis;
- Determining root cause and corrective action for

Based on the location and activity models 220 provided by the mobility and activity manager 110, the filtering manager 120 determines a representative set of subscribers for which monitoring is performed. The representative subscriber set is primarily focused on covering the entire geographical area of the network 10 by active subscribers in order to provide a statistically large enough set of KP! samples so that the network health can be evaluated in each of the defined geographical areas without monitoring the whole subscriber base, which is expensive. The representative subscriber set computation is an optimization process that aims to fulfill the following conditions:
- The expected number of active subscribers in each defined time segment and each defined geographical area is at least *subs_minimum*, where *subs_minimum* is a suitable parameter that enables statistically significant number of KPI sample collection, e.g., *subs_minimum* =100. The parameter subs_minimum is preferably determined with an appropriate overhead included, since that is only an estimate and there is no guarantee to exactly have that number of active subscribers in each area and time segment.
- The total number of subscribers in the representative set is minimized while taking into account all defined time segments and defined geographical areas.

In case multiple solutions exist for covering the entire geographical area of the mobile network with minimal number of subscribers in the representative set, those subscribers are preferred where the expected activity intensity is maximal.

By including dimensions such as subscription type or device type in the input data, as an auxiliary condition, the optimization process can take these dimensions into account as well, beyond the primary dimension location. Whenever multiple solutions exist for covering the entire geographical area of the mobile network with minimal number of subscribers in the representative set, the process can select that representative subscriber set among those where the values of these additional dimensions are also more evenly distributed. In practice this yields good coverage for all subscription types, all available device types, etc.

The filtering manager 120 generates and sends control signaling to various network node in the RAN 20 and core network 30 to enforce the data collection for the representative set of subscribers. Figure 3 illustrates the data sources and control signaling in an exemplary embodiment. The solid black dots in Figure 3 represent the data sources (user data and events). The dashed lines show the flow of data and events to the network analytics system 100. In the exemplary embodiment shown in Figure 3, user plane traffic is filtered by a packet broker and the filtered traffic flow is input to the UP analyzer. Events captured by the AMF 40 and SMF 45 in the core network30 and gNB 25 are input to the correlator 140.

User plane traffic is captured by a packet broker 160 or virtual TAP (vTAP). The filtering manager 120 sends the representative subscriber list to the packet broker 160 periodically, which filters the traffic for the required subscribers. The UP Analyzer 130 receives the UP traffic for the representative subscribers and calculates the user plane KPIs for the filtered traffic.

The filtering manager 120 activates the events needed for calculating the symptom KPIs in the monitoring phase. The filtering manager 120 also activates additional troubleshooting events for troubleshooting KPIs as needed. In one embodiments, the troubleshooting events are activated for subscribers in the affected monitoring area and for specific node instances that are being impacted. The activation of events in the network nodes and filtering of user plane traffic is done by sending configuration messages. The correlator 140 receives and timestamps the events real-time and correlates them by IMSI with the user plane traffic flow. The symptom KPIs are calculated in by the network analyzer 150.

According to one aspect of the disclosure, a limited set of symptom KPIs/events is monitored to detect service quality degradation. For example, in case of streaming video services, the monitoring solution can detect rebuffering events (based on user plane transport network metrics) and can calculate an average playback time between two rebufferings KPI as a service quality metric. In case of service degradation, the set of representative subscribers and/or events can be temporarily expanded to enable root cause analysis. Generally, the expansion of the data collection focuses on the problematic monitoring areas.

As previously noted, the location database 225 contains a list of all subscribers and their last known location. When service quality degradation is detected, the filtering manager 120 can query the location database 225 to obtain a list of subscribers in the affected monitoring area. The filtering manager 120 can add additional subscribers in the affected monitoring area to the representative set of subscribers. The additional subscribers may comprise a predetermined number of additional subscribers, the subscribers in the affected monitoring area that meet some predetermined criteria (e.g., active subscribers with a predetermined level of activity), or all subscribers in the affected area. Thus, the representative set is expanded temporarily during a troubleshooting period to collect more data for root cause analysis. Once, the causes of the service quality degradation are determined, the additional subscribers added during the troubleshooting period can be removed.

In addition to expansion of the subscribers, the filtering manager 120 can temporarily expand the number and type of events that are collected during the troubleshooting period to facilitate root cause analysis. The events activated during the troubleshooting period are referred to herein as the troubleshooting events or RCA events. These additional event types can help understanding of the service quality degradation problem and find the root cause of the service quality degradation. For example, in case of video service quality degradation, the filtering manager 120 can enable radio environment measurements, radio connection loss events, and more details on handovers to aid the root cause analysis. Once, the causes of the service quality degradation are determined, the filtering manager 120 can revert to the base set of events used for normal KPI monitoring.

Even in the absence of service quality degradation, the quality of the representative set of subscribers may be modified from time to time. For example, the location and activity models 220 may be recomputed at periodic intervals (e.g., once per week) or responsive to some predetermined events. When new location and activity models 220 are available, the filtering manager 120 can recompute a new set of representative subscribers based on the new location and activity models 220.

Additionally, the filtering manager 120 can be configured to make minor adjustments to the set of representative subscribers before new location and activity models 220 are available. As previously noted, the representative set of subscribers is a best estimate based on past behavior based on the location and activity models 220. Actual events may deviate from the location and activity model used to generate the set of representative subscribers. For example, a subscriber selected for inclusion in the representative set may be inactive, or may be active but not in the location predicted in the location model. Also, the activity level could be lower than expected. In some cases, the representative set may include less than the desired minimum number of subscribers for a particular monitoring area. The filtering manager 120 can be configured to make adjustments to the set of representative subscribers. The filtering manager 120 can, for example, replace an inactive subscriber or subscriber with low activity with an active subscriber or another subscriber with a higher activity level in the same monitoring area. When the number of active subscribers is less than a desired minimum, the filtering manager 120 can add additional subscribers to the set. In some cases, the filtering manager 120 may trigger a recomputation of the location and activity models 220, in which case the set of representative subscribers is determined based on the new location and activity models 220.

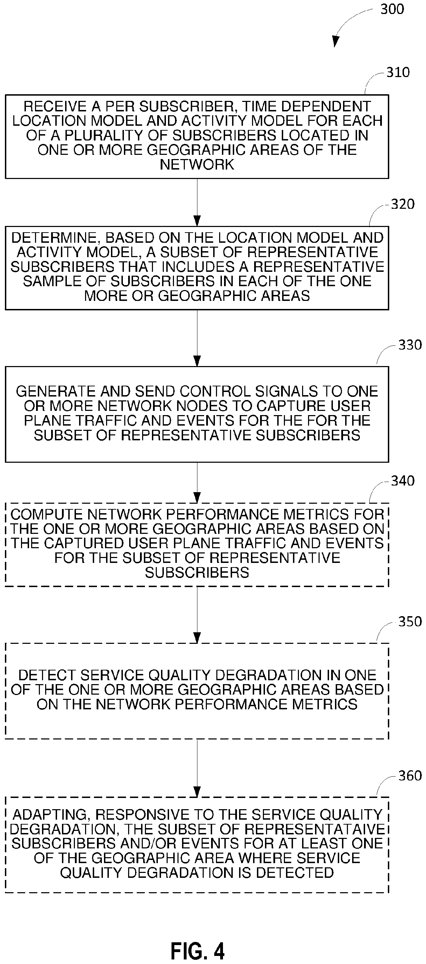

Figure 4 illustrates an exemplary method 300 implemented by a network analytics system 100 comprising one or more network nodes. The network analytics system 100 receives a per subscriber, time dependent location model and activity model for each of a plurality of subscribers located in one or more geographic areas of the network (block 310). The network analytics system 100 determines, based on the location models and activity models, a subset of representative subscribers that includes a representative sample of subscribers in each of the one more or geographic areas (block 320). The network analytics system 100 further generates and sends control signals to one or more network nodes to capture user plane traffic and events for the subset of representative subscribers (block 330).

Some embodiments of the method 300 further comprise computing network performance metrics (e.g., KPIs) for the one or more geographic areas based on the captured user plane traffic and events for the subset of representative subscribers (block 340), and detecting service quality degradation in one of the one or more geographic areas based on the network performance metrics (block 350).

Some embodiments of the method 300 further comprise adapting, responsive to service quality degradation, the subset of representative subscribers to increase a number of the representative subscribers for at least one geographic area where service quality degradation is detected (block 360).

Some embodiments of the method 300 further comprise expanding event types being captured for the subset of representative subscribers to include one or more troubleshooting events.

Some embodiments of the method 300 further comprise updating the subset of representative subscribers.

In some embodiments of the method 300, updating the subset of representative subscribers is performed periodically or responsive to predetermined triggers.

In some embodiments of the method 300, updating the subset of representative subscribers comprises replacing a current representative subscriber with a new representative subscriber with a higher activity level.

In some embodiments of the method 300, updating the subset of representative subscribers comprises replacing comprises adding representative subscribers to the subset when a number of active subscribers in one of the geographic areas falls below a threshold.

In some embodiments of the method 300, updating the subset of representative subscribers comprises is performed responsive to a mobility event for one of the representative subscribers.

In some embodiments of the method 300, updating the subset of representative subscribers comprises receiving an updated location model and activity model, and determining an updated subset of representative subscribers based on the updated location model and activity model.

Some embodiments of the method 300 further comprise generating the location model and activity model.

In some embodiments of the method 300, the location model comprises, for each of the plurality of subscribers, a set of location probabilities, each location probability representing a likelihood that the subscriber will be within a particular geographic area at a particular time.

In some embodiments of the method 300, the activity model comprises, for each of the plurality of subscribers, a set of activity probabilities, each activity probability representing a likelihood that the subscriber will be active at a particular time.

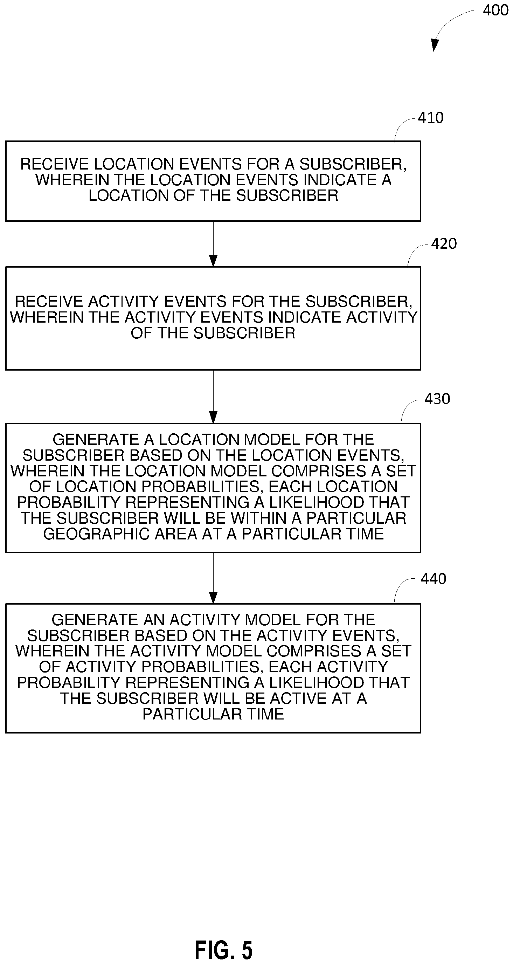

Figure 5 illustrates an exemplary method 400 implemented by a network analytics system 100 comprising one or more network nodes of generating location and activity models 220 for network monitoring. The network analytics system 100 receives location events for a subscriber, wherein the location events indicate a location of the subscriber (block 410). The network analytics system 100 further receives activity events for the subscriber, wherein the activity events indicate activity of the subscriber (block 420). The network analytics system 100 generates a location model for the subscriber based on the location events (block 430). The location model comprises a set of location probabilities, each location probability representing a likelihood that the subscriber will be within a particular geographic area at a particular time. The network analytics system 100 further generates an activity model for the subscriber based on the activity events (block 440). The activity model comprises a set of activity probabilities, each activity probability representing a likelihood that the subscriber will be active at a particular time.

In some embodiments of the method 400, the activity model further comprises a set of intensity parameters, each intensity parameter indicating a predicted activity level of the subscriber at a particular time.

Some embodiments of the method 400 further comprise maintaining a location database indicating a current location of each of the one or more subscribers, and updating the location database responsive to the location events.

Some embodiments of the method 400 further comprise receiving a request from a network monitoring control node for subscribers in a specified geographic area, and providing, responsive to the request, a list of one or more subscribers in the specified geographic area to the network monitoring control node.

Some embodiments of the method 400 further comprise receiving a location request from a network monitoring control node, the location request including a subscriber identifier for one of the subscribers, and providing, responsive to the request and for each, the geographic area in which the subscriber is currently located.

An apparatus can perform any of the methods herein described by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

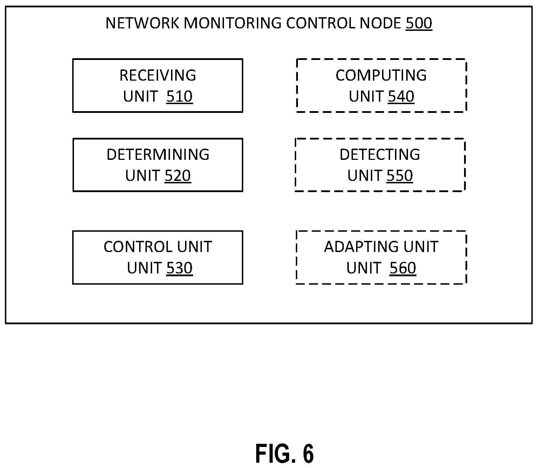

Figure 6 illustrates an exemplary network monitoring control node 500 configured to perform the method shown in Figure 5. The network monitoring control node 500 comprises a receiving unit 510, a determining unit 520 a control unit 530, and optional computing unit 540, an optional detecting unit 550 and an optional adapting unit 560. The various units 510 - 560 can be implemented by hardware and/or by software code that is executed by a processor or processing circuit.

The receiving unit 520 is configured to receive a per subscriber, time dependent location model and activity model for a plurality of subscribers located in one or more geographic areas of the network. The determining unit 520 is configured to determine, based on the location models and activity models, a subset of representative subscribers that includes a representative sample of subscribers in each of the one more or geographic areas. The control unit 530 is configured to generate and send control signals to one or more network nodes to capture user plane traffic and events for the for the subset of representative subscribers. The computing unit 540, when present, is configured to compute network performance metrics for the one or more geographic areas based on the captured user plane traffic and events for the subset of representative subscribers. The detecting unit 550, when present, is configured to detect service quality degradation in one of the one or more geographic areas based on the network performance metrics. The adapting unit 560, when present, is configured to adapt, responsive to service quality degradation, the subset of representative subscribers to increase a number of the representative subscribers for at least one geographic area where service quality degradation is detected, the event types being captured for the subset of representative subscribers to include one or more troubleshooting events, or both.

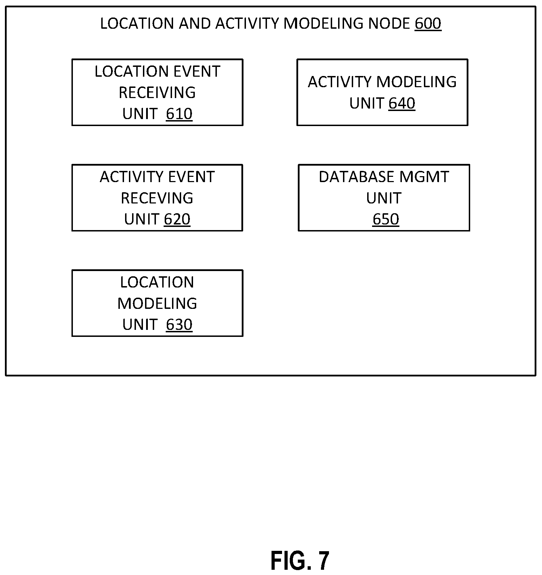

Figure 7 illustrates an exemplary location and activity modeling node 600 configured to perform the method shown in Figure 6. The location and activity modeling node 600 comprises a location event receiving unit 610, an activity event receiving unit 620, a location modeling unit 630, an activity modeling unit 640, and a database management unit 650. The various units 610 - 650 can be implemented by hardware and/or by software code that is executed by a processor or processing circuit. The location event receiving unit 610 is configured to receive location events for a subscriber, wherein the location events indicate a location of the subscriber. The activity event receiving unit 620 is configured to receives activity events for the subscriber, wherein the activity events indicate activity of the subscriber. The location modeling unit 630 is configured to generate a location model for the subscriber based on the location events. The location model comprises a set of location probabilities, each location probability representing a likelihood that the subscriber will be within a particular geographic area at a particular time. The activity modeling unit 640, when present, is configured to generate an activity model for the subscriber based on the activity events. The activity model comprises a set of activity probabilities, each activity probability representing a likelihood that the subscriber will be active at a particular time. In some embodiments, the activity model further comprises, for each subscriber, intensity parameters indicating a predicted activity level of the subscriber at a particular time. The database management unit 650, when present, is configured to maintain a location database storing a last known location for each of the subscribers.

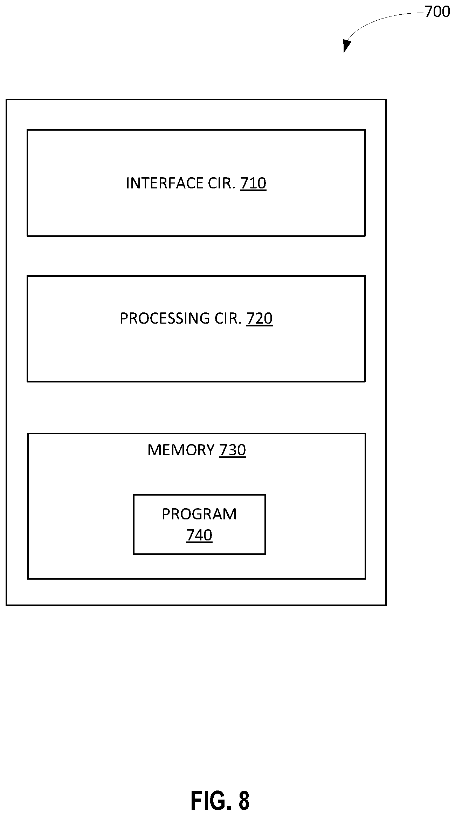

Figure 8 illustrates a network node 700 according to one embodiment that may be configured to function as a network monitoring control node 500, location and activity modeling node 600, or both. The network node 700 comprises communication circuitry 720, processing circuitry 730, and memory 740.

The communication circuitry 720 comprises network interface circuitry for communicating with other network nodes in the wireless communication network over a communication network.

Processing circuitry 730 controls the overall operation of the network node 700 and is configured to perform one or more of the methods 200, 300 shown in Figures 4 and 5 respectively. Such processing includes coding and modulation of transmitted data signals, and the demodulation and decoding of received data signals. The processing circuitry 730 may comprise one or more microprocessors, hardware, firmware, or a combination thereof.

Memory 740 comprises both volatile and non-volatile memory for storing computer program code and data needed by the processing circuitry 730 for operation. Memory 740 may comprise any tangible, non-transitory computer-readable storage medium for storing data including electronic, magnetic, optical, electromagnetic, or semiconductor data storage. Memory 740 stores a computer program 750 comprising executable instructions that configure the processing circuitry 730 to implement the methods 200, 300 according to Figures 4 and 5 respectively. A computer program in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 750 for configuring the processing circuitry 730 as herein described may be stored in a removable memory, such as a portable compact disc, portable digital video disc, or other removable media. The computer program 750 may also be embodied in a carrier such as an electronic signal, optical signal, radio signal, or computer readable storage medium.

Those skilled in the art will also appreciate that embodiments herein further include corresponding computer programs. A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

At least some of these embodiments may be described as applicable in certain contexts and/or wireless network types for illustrative purposes, but the embodiments are similarly applicable in other contexts and/or wireless network types not explicitly described.

## Claims

1. A method (300) of network performance monitoring implemented by a network node (500, 700), the method (300) comprising:
receiving (310) a per subscriber, time dependent location model and a per subscriber, time dependent activity model for each of a plurality of subscribers located in one or more geographic areas of the network;
determining (320), based on the location models and activity models, a subset of representative subscribers that includes a representative sample of subscribers in each of the one or more geographic areas;
generating and sending (330) control signals to one or more network nodes to capture user plane traffic and events for the subset of representative subscribers;
computing (340) network performance metrics for the one or more geographic areas based on the captured user plane traffic and events for the subset of representative subscribers; and
detecting (350) service quality degradation in one of the one or more geographic areas based on the network performance metrics.

2. The method (300) of claim 1 further comprising adapting, responsive to service quality degradation, the subset of representative subscribers to increase a number of the representative subscribers in the subset of representative subscribers for at least one geographic area where service quality degradation is detected.

3. The method (300) of claim 1 or 2 further comprising expanding event types captured for the subset of representative subscribers to include one or more troubleshooting events for root cause analysis.

4. The method (300) of any one of claims 1 to 3 further comprising updating the subset of representative subscribers.

5. The method (300) of claim 4 wherein updating the subset of representative subscribers is performed periodically or responsive to predetermined triggers.

6. The method (300) of claim 4 wherein updating the subset of representative subscribers comprises replacing a current representative subscriber with a new representative subscriber with a higher activity level.

7. The method (300) of claim 4 wherein updating the subset of representative subscribers comprises replacing comprises adding representative subscribers to the subset when a number of active subscribers in one of the geographic areas falls below a threshold.

8. The method (300) of claim 4 wherein updating the subset of representative subscribers comprises is performed responsive to a mobility event for one of the representative subscribers in the subset of representative subscribers.

9. The method (300) of claim 4 wherein updating the subset of representative subscribers comprises:
receiving an updated location model and activity model; and
determining an updated subset of representative subscribers based on the updated location model and activity model.

10. The method (300) of any one of claims 1 to 9 further comprising generating the location models and activity models.

11. The method (300) of any one of clam 1 to 10 wherein:
the location model comprises, for each of the plurality of subscribers in the subset of representative subscribers, a set of location probabilities, each location probability representing a likelihood that the subscriber will be within a particular geographic area at a particular time; and
the activity model comprises, for each of the plurality of subscribers in the subset of representative subscribers, a set of activity probabilities, each activity probability representing a likelihood that the subscriber will be active at a particular time.

12. A network analytics system (100) for network performance monitoring, the network analytics system being configured to:
receive (310) a per subscriber, time dependent location model and a per subscriber, time dependent activity model for each of a plurality of subscribers located in one or more geographic areas of the network;
determine (320), based on the location model and activity model, a subset of representative subscribers that includes a representative sample of subscribers in each of the one or more geographic areas;
generate and send (330) control signals to one or more network nodes to capture user plane traffic and events for the subset of representative subscribers;
compute network performance metrics for the one or more geographic areas based on the captured user plane traffic and events for the subset of representative subscribers; and
detect service quality degradation in one of the one or more geographic areas based on the network performance metrics.

13. The network analytics system (100) according to claim 12 further configured to perform the method of any one of claims 2 to 11.

14. A computer program comprising executable instructions that, when executed by a processing circuit in a network analytics system (100), causes the network analytics system (100) to perform any one of the methods of claims 1 to 11.

15. A carrier containing a computer program of claim 14, wherein the carrier is one of an electronic signal, optical signal, radio signal, or computer readable storage medium.

## Patentansprüche

1. Verfahren (300) zur Netzwerkleistungsüberwachung, das von einem Netzwerkknoten (500, 700) implementiert wird, wobei das Verfahren (300) umfasst:
Empfangen (310) eines zeitabhängigen Standortmodells pro Teilnehmer und eines zeitabhängigen Aktivitätsmodells pro Teilnehmer für jeden einer Mehrzahl von Teilnehmern, die sich in einem oder mehreren geografischen Bereichen des Netzwerks befinden;
Bestimmen (320) einer Teilmenge repräsentativer Teilnehmer, die eine repräsentative Stichprobe von Teilnehmern in jedem des einen oder der mehreren geografischen Bereiche umfasst, basierend auf den Standortmodellen und den Aktivitätsmodellen;
Erzeugen und Senden (330) von Steuersignalen an einen oder mehrere Netzwerkknoten, um Verkehr und Ereignisse auf Benutzerebene für die Teilmenge repräsentativer Teilnehmer zu erfassen;
Berechnen (340) von Netzwerkleistungsmetriken für den einen oder die mehreren geografischen Bereiche basierend auf dem erfassten Verkehr und den erfassten Ereignissen auf Benutzerebene für die Teilmenge repräsentativer Teilnehmer; und
Erkennen (350) einer Dienstqualitätsverschlechterung in einem des einen oder der mehreren geografischen Bereiche basierend auf den Netzwerkleistungsmetriken.

2. Verfahren (300) nach Anspruch 1, ferner umfassend ein Anpassen der Teilmenge repräsentativer Teilnehmer in Reaktion auf die Dienstqualitätsverschlechterung, um eine Anzahl der repräsentativen Teilnehmer in der Teilmenge repräsentativer Teilnehmer für mindestens einen geografischen Bereich zu erhöhen, in dem die Dienstqualitätsverschlechterung erkannt wird.

3. Verfahren (300) nach Anspruch 1 oder 2, ferner umfassend ein Erweitern der Ereignistypen, die für die Teilmenge repräsentativer Teilnehmer erfasst werden, um ein oder mehrere Fehlerbehebungsereignisse für die Ursachenanalyse einzubeziehen.

4. Verfahren (300) nach einem der Ansprüche 1 bis 3, ferner umfassend ein Aktualisieren der Teilmenge repräsentativer Teilnehmer.

5. Verfahren (300) nach Anspruch 4, wobei das Aktualisieren der Teilmenge repräsentativer Teilnehmer periodisch oder in Reaktion auf vorbestimmte Auslöser durchgeführt wird.

6. Verfahren (300) nach Anspruch 4, wobei das Aktualisieren der Teilmenge repräsentativer Teilnehmer ein Ersetzen eines aktuellen repräsentativen Teilnehmers durch einen neuen repräsentativen Teilnehmer mit einem höheren Aktivitätsgrad umfasst.

7. Verfahren (300) nach Anspruch 4, wobei das Aktualisieren der Teilmenge repräsentativer Teilnehmer ein Hinzufügen repräsentativer Teilnehmer zu der Teilmenge umfasst, wenn eine Anzahl aktiver Teilnehmer in einem der geografischen Bereiche unter einen Schwellenwert abfällt.

8. Verfahren (300) nach Anspruch 4, wobei das Aktualisieren der Teilmenge repräsentativer Teilnehmer in Reaktion auf ein Mobilitätsereignis für einen der repräsentativen Teilnehmer in der Teilmenge repräsentativer Teilnehmer durchgeführt wird.

9. Verfahren (300) nach Anspruch 4, wobei das Aktualisieren der Teilmenge repräsentativer Teilnehmer umfasst:
Empfangen eines aktualisierten Standortmodells und Aktivitätsmodells; und
Bestimmen einer aktualisierten Teilmenge repräsentativer Teilnehmer basierend auf dem aktualisierten Standortmodell und Aktivitätsmodell.

10. Verfahren (300) nach einem der Ansprüche 1 bis 9, ferner umfassend ein Erzeugen der Standortmodelle und Aktivitätsmodelle.

11. Verfahren (300) nach einem der Ansprüche 1 bis 10, wobei:
das Standortmodell für jeden der Mehrzahl von Teilnehmern in der Teilmenge repräsentativer Teilnehmer einen Satz von Standortwahrscheinlichkeiten umfasst, wobei jede Standortwahrscheinlichkeit eine Wahrscheinlichkeit darstellt, dass sich der Teilnehmer zu einem spezifischen Zeitpunkt innerhalb eines spezifischen geografischen Bereichs befinden wird; und
das Aktivitätsmodell für jeden der Mehrzahl von Teilnehmern in der Teilmenge repräsentativer Teilnehmer einen Satz von Aktivitätswahrscheinlichkeiten umfasst, wobei jede Aktivitätswahrscheinlichkeit eine Wahrscheinlichkeit darstellt, dass der Teilnehmer zu einem spezifischen Zeitpunkt aktiv sein wird.

12. Netzwerkanalysesystem (100) zur Netzwerkleistungsüberwachung, wobei das Netzwerkanalysesystem konfiguriert ist zum:
Empfangen (310) eines zeitabhängigen Standortmodells pro Teilnehmer und eines zeitabhängigen Aktivitätsmodells pro Teilnehmer für jeden einer Mehrzahl von Teilnehmern, die sich in einem oder mehreren geografischen Bereichen des Netzwerks befinden;
Bestimmen (320) einer Teilmenge repräsentativer Teilnehmer, die eine repräsentative Stichprobe von Teilnehmern in jedem des einen oder der mehreren geografischen Bereiche umfasst, basierend auf dem Standortmodell und dem Aktivitätsmodell;
Erzeugen und Senden (330) von Steuersignalen an einen oder mehrere Netzwerkknoten, um Verkehr und Ereignisse auf Benutzerebene für die Teilmenge repräsentativer Teilnehmer zu erfassen;
Berechnen von Netzwerkleistungsmetriken für den einen oder die mehreren geografischen Bereiche basierend auf dem erfassten Verkehr und den erfassten Ereignissen auf Benutzerebene für die Teilmenge repräsentativer Teilnehmer; und
Erkennen einer Dienstqualitätsverschlechterung in einem des einen oder der mehreren geografischen Bereiche basierend auf den Netzwerkleistungsmetriken.

13. Netzwerkanalysesystem (100) nach Anspruch 12, das ferner so konfiguriert ist, dass es das Verfahren nach einem der Ansprüche 2 bis 11 durchführt.

14. Computerprogramm, umfassend ausführbare Anweisungen, die bei Ausführung durch eine Verarbeitungsschaltung in einem Netzwerkanalysesystem (100) das Netzwerkanalysesystem (100) zum Durchführen eines der Verfahren nach Anspruch 1 bis 11 veranlassen.

15. Datenträger, der ein Computerprogramm nach Anspruch 14 enthält, wobei der Datenträger eines von einem elektronischen Signal, einem optischen Signal, einem Funksignal oder einem computerlesbaren Speichermedium ist.

## Revendications

1. Procédé (300) de surveillance de performances de réseau mis en œuvre par un noeud de réseau (500, 700), le procédé (300) comprenant :
la réception (310) d'un modèle d'emplacement dépendant du temps par abonné et d'un modèle d'activité dépendant du temps par abonné pour chacun d'une pluralité d'abonnés situés dans une ou plusieurs zones géographiques du réseau ;
la détermination (320), sur la base des modèles d'emplacement et des modèles d'activité, d'un sous-ensemble d'abonnés représentatifs comprenant un échantillon représentatif d'abonnés dans chacune des une ou plusieurs zones géographiques ;
la génération et l'envoi (330) de signaux de commande à un ou plusieurs noeuds de réseau pour capturer un trafic de plan d'utilisateur et des événements pour le sous-ensemble d'abonnés représentatifs ;
le calcul (340) de métriques de performances de réseau pour les une ou plusieurs zones géographiques sur la base du trafic de plan d'utilisateur capturé et des événements capturés pour le sous-ensemble d'abonnés représentatifs ; et
la détection (350) d'une dégradation de qualité de service dans l'une des une ou plusieurs zones géographiques sur la base des métriques de performances de réseau.

2. Procédé (300) selon la revendication 1, comprenant en outre l'adaptation, en réponse à une dégradation de qualité de service, du sous-ensemble d'abonnés représentatifs pour augmenter un nombre des abonnés représentatifs dans le sous-ensemble d'abonnés représentatifs pour au moins une zone géographique dans laquelle une dégradation de qualité de service est détectée.

3. Procédé (300) selon la revendication 1 ou 2, comprenant en outre l'élargissement de types d'événements capturés pour le sous-ensemble d'abonnés représentatifs pour inclure un ou plusieurs événements de dépannage pour une analyse des causes fondamentales.

4. Procédé (300) selon l'une quelconque des revendications 1 à 3, comprenant en outre la mise à jour du sous-ensemble d'abonnés représentatifs.

5. Procédé (300) selon la revendication 4, dans lequel la mise à jour du sous-ensemble d'abonnés représentatifs est réalisée périodiquement ou en réponse à des déclenchements prédéterminés.

6. Procédé (300) selon la revendication 4, dans lequel la mise à jour du sous-ensemble d'abonnés représentatifs comprend le remplacement d'un abonné représentatif courant par un nouvel abonné représentatif avec un niveau d'activité supérieur.

7. Procédé (300) selon la revendication 4, dans lequel la mise à jour du sous-ensemble d'abonnés représentatifs comprend l'ajout d'abonnés représentatifs au sous-ensemble lorsqu'un nombre d'abonnés actifs dans l'une des zones géographiques devient inférieur à un seuil.

8. Procédé (300) selon la revendication 4, dans lequel la mise à jour du sous-ensemble d'abonnés représentatifs est réalisée en réponse à un événement de mobilité pour l'un des abonnés représentatifs dans le sous-ensemble d'abonnés représentatifs.

9. Procédé (300) selon la revendication 4, dans lequel la mise à jour du sous-ensemble d'abonnés représentatifs comprend :
la réception d'un modèle d'emplacement mis à jour et d'un modèle d'activité mis à jour ; et
la détermination d'un sous-ensemble mis à jour d'abonnés représentatifs sur la base du modèle d'emplacement mis à jour et du modèle d'activité mis à jour.

10. Procédé (300) selon l'une quelconque des revendications 1 à 9, comprenant en outre la génération des modèles d'emplacement et des modèles d'activité.

11. Procédé (300) selon l'une quelconque des revendications 1 à 10, dans lequel :
le modèle d'emplacement comprend, pour chacun de la pluralité d'abonnés dans le sous-ensemble d'abonnés représentatifs, un ensemble de probabilités d'emplacement, chaque probabilité d'emplacement représentant une vraisemblance que l'abonné se trouve à l'intérieur d'une zone géographique particulière à un moment particulier ; et
le modèle d'activité comprend, pour chacun de la pluralité d'abonnés dans le sous-ensemble d'abonnés représentatifs, un ensemble de probabilités d'activité, chaque probabilité d'activité représentant une vraisemblance que l'abonné soit actif à un moment particulier.

12. Système d'analyse de réseau (100) pour une surveillance de performances de réseau, le système d'analyse de réseau étant configuré pour :
recevoir (310) un modèle d'emplacement dépendant du temps par abonné et un modèle d'activité dépendant du temps par abonné pour chacun d'une pluralité d'abonnés situés dans une ou plusieurs zones géographiques du réseau ;
déterminer (320), sur la base du modèle d'emplacement et du modèle d'activité, un sous-ensemble d'abonnés représentatifs comprenant un échantillon représentatif d'abonnés dans chacune des une ou plusieurs zones géographiques ;
générer et envoyer (330) des signaux de commande à un ou plusieurs noeuds de réseau pour capturer un trafic de plan d'utilisateur et des événements pour le sous-ensemble d'abonnés représentatifs ;
calculer des métriques de performances de réseau pour les une ou plusieurs zones géographiques sur la base du trafic de plan d'utilisateur capturé et des événements capturés pour le sous-ensemble d'abonnés représentatifs ; et
détecter une dégradation de qualité de service dans l'une des une ou plusieurs zones géographiques sur la base des métriques de performances de réseau.

13. Système d'analyse de réseau (100) selon la revendication 12, configuré en outre pour réaliser le procédé selon l'une quelconque des revendications 2 à 11.

14. Programme informatique comprenant des instructions exécutables qui, lorsqu'elles sont exécutées par un circuit de traitement dans un système d'analyse de réseau (100), amènent le système d'analyse de réseau (100) à réaliser l'un quelconque des procédés selon les revendications 1 à 11.

15. Support contenant un programme informatique selon la revendication 14, dans lequel le support est l'un parmi un signal électronique, un signal optique, un signal radio et un support de stockage lisible par ordinateur.
